# EUROPEAN PATENT APPLICATION

(11) **EP 4 791 052 A1**
(43) Date of publication of application: **12.08.2026**
(21) Application number: 24942059.7
(22) Date of filing: 17.12.2024
(51) Int. Cl.: H04W 4/80, H04W 12/50, H04W 76/14, H04W 84/18

(54) **BLUETOOTH ADAPTER AND PAIRING METHOD THEREFOR**

(71) Applicant: Shenzhen Shokz Co., Ltd., Shenzhen, Guangdong 518108 (CN)
(72) Inventor: TIAN, Qingyuan, Shenzhen, Guangdong 518108 (CN); TANG, Hailong, Shenzhen, Guangdong 518108 (CN); ZHANG, Zhongzheng, Shenzhen, Guangdong 518108 (CN)
(74) Representative: Wang, Bo
(86) International application number: PCT/CN2024/139985
(87) International publication number: WO 2026/129146

(57) **Abstract**

The present disclosure provides a Bluetooth adapter. The Bluetooth adapter includes a connection port configured to be plugged into a host computer. The Bluetooth adapter further includes a Bluetooth module configured to receive a signal from the host computer through the connection port. In response to determining that the signal from the host computer is a signal relating to audio control and is triggered in a preset mode, the Bluetooth module enters a first pairing state. The first pairing state allows the Bluetooth adapter to be connected to a device with an audio output function.

## Description

### TECHNICAL FIELD

The present disclosure relates to the field of data transmission, and in particular, to a Bluetooth adapter and a method for the Bluetooth adapter to enter a pairing state.

### BACKGROUND

Bluetooth technology enables direct connection between two devices without the need for network infrastructure (e.g., a wireless router, an access point, or the like) and is often used to connect devices such as a wireless headphone, a keyboard, a mouse, a speaker, and a computer or other mobile devices. A Bluetooth adapter is a hardware device configured to implement wireless communication between devices. With the development of Bluetooth technology, the requirement for Bluetooth adapters is increasing. Users expect the Bluetooth adapter to have more abundant functions, a simpler structure, and a smaller size to achieve better portability and cost-effectiveness, and to be more convenient for people to use.

Therefore, it is desirable to provide a Bluetooth adapter that is simple, portable, low-cost, and easy to use.

### SUMMARY

One or more embodiments of the present disclosure provide a Bluetooth adapter, includes a connection port. The connection port is configured to be plugged into a host computer. The Bluetooth adapter further includes a Bluetooth module configured to receive a signal from the host computer through the connection port. In response to determining that the signal from the host computer is a signal relating to audio control and is triggered in a preset mode, the Bluetooth module enters a first pairing state. The first pairing state allows the Bluetooth adapter to be connected to a device with an audio output function.

In some embodiments, the signal relating to audio control includes one or more of a pause playback control signal, a resume playback control signal, a mute control signal, and a volume adjustment control signal.

In some embodiments, the preset mode includes triggering the same signal multiple times within a preset time period, or triggering different signals according to a preset rule within a preset time period.

In some embodiments, the Bluetooth adapter is further configured to connect to the device without an audio output function while maintaining a connection with a device with an audio output function.

In some embodiments, the Bluetooth adapter is further configured such that in response to determining that the signal from the host computer is not an audio control signal and is triggered in another preset mode, the Bluetooth module enters a second pairing state. The second pairing state allows the Bluetooth adapter to be connected to a device without an audio output function.

In some embodiments, the Bluetooth module is further configured to, in the first pairing state, identify a matching device with the strongest signal from at least one surrounding matching device and connect to the matching device with the strongest signal.

One or more embodiments of the present disclosure provide a method for a Bluetooth adapter to enter a pairing state. The Bluetooth adapter includes a connection port. The connection port is configured to be plugged into a host computer. The Bluetooth adapter further includes a Bluetooth module. The Bluetooth module is configured to receive a signal from the host computer through the connection port. In response to determining that the signal from the host computer is a signal relating to audio control and is triggered in a preset mode, the Bluetooth module enters a first pairing state, the first pairing state allowing the Bluetooth adapter to be connected to a device with an audio output function.

One or more embodiments of the present disclosure provide a Bluetooth adapter. The Bluetooth adapter includes a connection port configured to be plugged into a host computer. The Bluetooth adapter further includes a Bluetooth module configured to receive a signal from the host computer through the connection port. In response to determining that a connection between the connection port and the host computer triggers a preset condition, the Bluetooth module enters a pairing state. The pairing state allows the Bluetooth adapter to be connected to other Bluetooth devices.

In some embodiments, the preset condition includes, after the connection port is plugged into the host computer, a first preset count of disconnections and a first preset count of re-insertions are completed within a specified time period, such that after the specified time period, the connection port is in a connection state with the host computer.

In some embodiments, the Bluetooth adapter further includes a marker device. The marker device is configured to generate a first marker when the connection port is plugged into the host computer. The marker device is further configured to generate a second marker in response to determining that the connection state between the connection port and the host computer lasts longer than a first preset time period, or no other marker is generated within a second preset time period after the first marker is generated. The Bluetooth module is further configured to enter the pairing state in response to determining that the first marker appears twice consecutively within the first preset time period.

In some embodiments, the pairing state allowing the Bluetooth adapter to be connected to other Bluetooth devices includes: the pairing state allowing the Bluetooth adapter to be connected to a specific type of Bluetooth device.

In some embodiments, the Bluetooth adapter is further configured to connect to a device without an audio output function while maintaining a connection with a device with an audio output function.

In some embodiments, the Bluetooth module is further configured to, in the pairing state, identify a matching device with the strongest signal from at least one surrounding matching device and connect to the matching device with the strongest signal.

One or more embodiments of the present disclosure provide a method for a Bluetooth adapter to enter a pairing state. The Bluetooth adapter includes a connection port configured to be plugged into a host computer. The Bluetooth adapter further includes a Bluetooth module configured to receive a signal from the host computer through the connection port. The method includes, in response to determining that a connection between the connection port and the host computer triggers a preset condition, causing the Bluetooth module to enter a pairing state. The pairing state allows the Bluetooth adapter to be connected to other Bluetooth devices.

One or more embodiments of the present disclosure provide a Bluetooth adapter. The Bluetooth adapter includes a connection port configured to be plugged into a host computer. The Bluetooth adapter further includes a Bluetooth module configured to communicate with a first Bluetooth device. The first Bluetooth device having a voice pickup function. The first Bluetooth device further has a voice recognition module configured to recognize voice information picked up by the first Bluetooth device. In response to determining that the voice information contains a pairing instruction, the Bluetooth module enters a pairing state. The pairing state allows the Bluetooth adapter to be connected to a second Bluetooth device.

In some embodiments, the Bluetooth module is further configured to disconnect communication with the first Bluetooth device in the pairing state.

In some embodiments, the Bluetooth module is further configured to, in the pairing state, determine whether to disconnect communication with the first Bluetooth device having the voice pickup function based on a type of the second Bluetooth device.

In some embodiments, the Bluetooth module is further configured such that, based on a type of the pairing instruction. The pairing state allows the Bluetooth adapter to be connected to a second Bluetooth device of a corresponding type.

In some embodiments, the Bluetooth adapter is further configured to connect to a device without an audio output function while maintaining a connection with a device with an audio output function.

In some embodiments, the Bluetooth module is further configured to, in the pairing state, identify a matching device with the strongest signal from at least one surrounding matching device and connect to the matching device with the strongest signal.

One or more embodiments of the present disclosure provide a method for a Bluetooth adapter to enter a pairing state. The Bluetooth adapter includes a connection port configured to be plugged into a host computer. The Bluetooth adapter further includes a Bluetooth module configured to communicate with a first Bluetooth device. The first Bluetooth device havsa voice pickup function. The first Bluetooth device further has a voice recognition module configured to recognize voice information picked up by the first Bluetooth device. The method includes, in response to determining that the voice information contains a pairing instruction, causing the Bluetooth module to enter a pairing state. The pairing state allows the Bluetooth adapter to be connected to a second Bluetooth device.

Additional features will be partially set forth in the following description, and for those skilled in the art, the additional features will become apparent by reviewing the following content and the accompanying drawings, or may be learned through the production or operation of examples. The features of the present disclosure may be achieved and obtained by practicing or using various aspects of the manners, tools, and combinations set forth in the following detailed examples.

### BRIEF DESCRIPTION OF THE DRAWINGS

The present disclosure will be further described by way of exemplary embodiments, and these exemplary embodiments will be described in detail with reference to the accompanying drawings. These embodiments are non-limiting, and in these embodiments, the same reference numerals denote the same structures.
FIG. 1 is a schematic diagram illustrating a system for a Bluetooth adapter to enter a pairing state according to some embodiments of the present disclosure;
FIG. 2 is a block diagram illustrating an exemplary Bluetooth adapter according to some embodiments of the present disclosure;
FIG. 3 is a block diagram illustrating another exemplary Bluetooth adapter according to some embodiments of the present disclosure;
FIG. 4 is a block diagram illustrating a further exemplary Bluetooth adapter according to some embodiments of the present disclosure;
FIG. 5 is a flowchart illustrating an exemplary process for a Bluetooth adapter to enter a pairing state according to some embodiments of the present disclosure;
FIG. 6 is a flowchart illustrating an exemplary process for a Bluetooth adapter to enter a pairing state according to another embodiment of the present disclosure;
FIG. 7 is a flowchart illustrating an exemplary process for a Bluetooth adapter to enter a pairing state according to yet another embodiment of the present disclosure;

### DETAILED DESCRIPTION

To more clearly illustrate the technical solutions of the embodiments of the present disclosure, a brief introduction to the accompanying drawings required for describing the embodiments will be provided below. Obviously, the accompanying drawings in the following description are merely some examples or embodiments of the present disclosure. For those skilled in the art, the present disclosure may also be applied to other similar scenarios based on these accompanying drawings without exerting creative efforts. It should be understood that these exemplary embodiments are provided merely to enable those skilled in the relevant art to better understand and further implement the present disclosure, rather than limiting the scope of the present disclosure in any way. Unless clearly indicated by the context or otherwise stated, the same reference numerals in the drawings denote the same structures or operations.

As shown in the present disclosure and the claims, unless the context clearly indicates otherwise, the terms "a," "an," "one," and/or "the" do not specifically refer to the singular and may include the plural. Generally speaking, the terms "include" and "comprise" only indicate the inclusion of explicitly identified steps and elements, and these steps and elements do not constitute an exclusive list. The method or device may also include other steps or elements. The term "based on" means "at least partially based on." The term "one embodiment" means "at least one embodiment," the term "another embodiment" means "at least one additional embodiment."

The present disclosure uses flowcharts to illustrate steps performed by the system according to embodiments of the present disclosure. It should be understood that the preceding or subsequent steps are not necessarily performed exactly in sequence. On the contrary, each step may be processed in reverse order or simultaneously. Meanwhile, other steps may also be added to these processes, or one or more steps may be removed from these processes.

A Bluetooth adapter is an interface converter configured to implement a Bluetooth connection between a host computer and a Bluetooth device (e.g., a headset, a keyboard, a mouse, a speaker, or the like). The process of establishing a connection between a Bluetooth adapter and a Bluetooth device is referred to as pairing. Some Bluetooth adapters are used in binding with specific Bluetooth devices and are not allowed to connect to other unbound devices. In such cases, there is no need to control the Bluetooth adapter to enter a pairing state. Some Bluetooth adapters, however, may enter the pairing state and connect to different devices. For example, a pairing key may be provided on a Bluetooth adapter, and a user may cause the Bluetooth adapter to enter the pairing state by pressing the pairing key. However, providing a key on the Bluetooth adapter results in the Bluetooth adapter having a relatively complex structure, a larger size, and a higher processing cost. As another example, the Bluetooth adapter may be caused to enter the pairing state through pairing software installed on the host computer (e.g., a driver program). This makes the use of the Bluetooth adapter more complex, brings some security issues related to software installation, and is not applicable to the host computer on which the pairing software can not be installed.

Embodiments of the present disclosure provide a Bluetooth adapter that does not need to enter the pairing state through the pairing key or additional pairing software. The Bluetooth adapter has a simpler structure, a smaller size, better portability and cost-effectiveness, and greater convenience in use.

The Bluetooth adapter and the method for the Bluetooth adapter to enter a pairing state provided by the embodiments of the present disclosure are described in detail below with reference to the accompanying drawings.

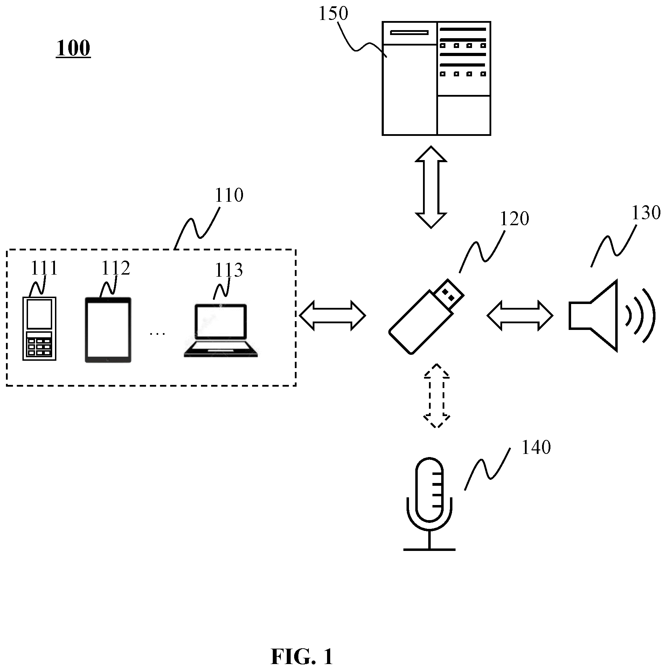

FIG. 1 is a schematic diagram illustrating a system 100 for a Bluetooth adapter to enter a pairing state according to some embodiments of the present disclosure. As shown in FIG. 1, the system 100 may include a host computer 110, a Bluetooth adapter 120, a Bluetooth device 130, a first Bluetooth device 140, and a processing device 150. The host computer 110 may be connected to the Bluetooth adapter 120 and further connected to the Bluetooth device 130 through the Bluetooth adapter 120, thereby implementing wireless communication between the host computer 110 and the Bluetooth device 130.

In some embodiments, the host computer 110 may include a mobile device 111, a tablet computer 112, a laptop computer 113, or the like, or any combination thereof. In some embodiments, the mobile device 111 may include a smart home device, a wearable device, an intelligent mobile device, a virtual reality device, an augmented reality device, or the like, or any combination thereof. In some embodiments, the smart home device may include a smart lighting device, a smart electrical control device, a smart monitoring device, a smart TV, a smart camera, an intercom, or the like, or any combination thereof. In some embodiments, the wearable device may include a smart bracelet, smart shoes and socks, smart glasses, a smart helmet, a smart watch, smart clothing, a smart backpack, a smart accessory, or the like, or any combination thereof. In some embodiments, the intelligent mobile device may include a smart phone, a Personal Digital Assistant (PDA), a game device, a navigation device, or the like, or any combination thereof. In some embodiments, the virtual reality device and/or the augmented reality device may include a virtual reality helmet, virtual reality glasses, a virtual reality eye mask, an enhanced virtual reality helmet, augmented reality glasses, an augmented reality goggle, or the like, or any combination thereof.

In some embodiments, the host computer 110 may send a signal to the Bluetooth adapter 120. For example, the host computer 110 may include an input device. Exemplary input devices may include a keyboard, a mouse, a touch screen, a key, a microphone, or the like, or a combination thereof. A user may operate the input device of the host computer 110 to cause the host computer 110 to generate the signal. The host computer 110 may be plugged into the Bluetooth adapter 120 to send the signal to the Bluetooth adapter 120.

The Bluetooth adapter 120 may include a connection port and a Bluetooth module. The connection port is configured to be plugged into the host computer 110. In some embodiments, the connection port may be a Universal Serial Bus (USB) port. For example, the host computer 110 may include a USB female connector, and the connection port of the Bluetooth adapter 120 may include a USB male connector. The host computer 110 and the Bluetooth adapter 120 may implement a plug-in connection through the USB female connector and the USB male connector.

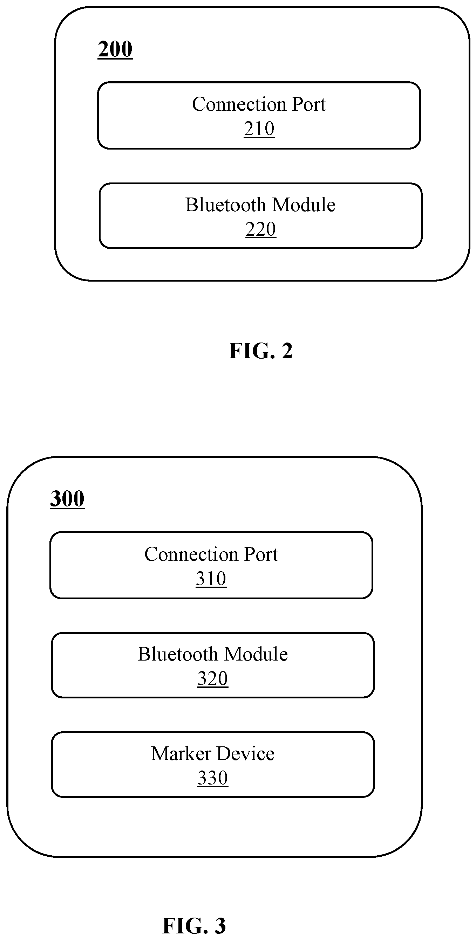

The Bluetooth module is configured to receive the signal from the host computer 110 through the connection port. In some embodiments, in response to determining that the signal from the host computer 110 is a signal triggered in a preset mode (e.g., an audio control signal), the Bluetooth module may enter a first pairing state. The first pairing state allows the Bluetooth adapter 120 to be connected to other Bluetooth devices (e.g., the Bluetooth device 130). For example, the Bluetooth module may include a chip and a Bluetooth component. The chip may receive the signal from the host computer 110 through the connection port and control the Bluetooth component to enter a pairing state or disconnect from the Bluetooth device based on the received signal. In some embodiments, a connection mode between the connection port and the host computer 110 may be adjusted. In response to determining that the connection mode between the connection port and the host computer 110 triggers a preset condition, the Bluetooth module enters a pairing state. The pairing state allows the Bluetooth adapter to be connected to other Bluetooth devices (e.g., the Bluetooth device 130). In some embodiments, the Bluetooth module is configured to communicate with a first Bluetooth device (e.g., the first Bluetooth device 140 shown in FIG. 1). The first Bluetooth device 140 has a voice pickup function. The Bluetooth adapter 120 may further include a voice recognition module. The voice recognition module is configured to recognize the voice information picked up by the first Bluetooth device 140. In response to determining that the voice information contains a pairing instruction, the Bluetooth module enters the pairing state. The pairing state allows the Bluetooth adapter 120 to be connected to other Bluetooth devices (e.g., the Bluetooth device 130, also referred to as a second Bluetooth device). More descriptions regarding the Bluetooth adapter 120 may be found in FIGs. 3-5 and relevant descriptions thereof, which are not repeated herein.

The Bluetooth device 130 refers to a device with a Bluetooth function. In some embodiments, the Bluetooth device 130 may include devices such as a headset, a keyboard, a mouse, a speaker, a game controller, or the like. In some embodiments, the type of the Bluetooth device 130 may be the same as or similar to that of the host computer 110. For example, the Bluetooth device 130 may include a mobile device, a tablet computer, a laptop computer, or the like, or any combination thereof.

The processing device 150 may process data and/or information obtained from components such as the host computer 110, the Bluetooth adapter 120, the Bluetooth device 130, the first Bluetooth device 140, or the like. The processing device 150 may execute program instructions based on the data, information, and/or processing results to perform one or more functions described in the present disclosure. For example, the processing device 150 may be implemented as the chip in the Bluetooth module. The processing device 150 may be configured to obtain the signal received by the connection port from the host computer 110 and cause the Bluetooth adapter 120 (e.g., the Bluetooth component) to enter the pairing state based on the signal from the host computer 110. As another example, the processing device 150 may be implemented as the voice recognition module in the Bluetooth adapter 120. The processing device 150 may be configured to recognize the voice information picked up by the first Bluetooth device 140 and cause the Bluetooth adapter 120 (e.g., the Bluetooth module therein) to enter the pairing state in response to determining that the voice information contains the pairing instruction.

In some embodiments, the processing device 150 may include one or more hardware processors, such as a microcontroller, a microprocessor, a Reduced Instruction Set Computer (RISC), an Application-Specific Integrated Circuit (ASIC), an Application-Specific Instruction-set Processor (ASIP), a Central Processing Unit (CPU), a Graphics Processing Unit (GPU), a Physics Processing Unit (PPU), a microcontroller unit, a Digital Signal Processor (DSP), a Field-Programmable Gate Array (FPGA), an Advanced RISC Machine (ARM), a Programmable Logic Device (PLD), any circuit or processor capable of executing one or more functions, or the like, or any combination thereof. The one or more hardware processors may be integrated into the Bluetooth adapter 120 as a part of the Bluetooth adapter 120. For example, the one or more hardware processors may be integrated into the Bluetooth module of the Bluetooth adapter 120. As another example, the one or more hardware processors may be integrated into the Bluetooth adapter 120 and connected to other components in the Bluetooth adapter 120 (e.g., the Bluetooth module, the voice recognition module, etc.), thereby controlling the other components to implement their respective functions.

Those of ordinary skill in the art will understand that when elements or components of the system 100 perform operations, the components may execute the operations through electrical signals and/or electromagnetic signals. For example, when the host computer 110 sends a signal to the Bluetooth adapter 120, the host computer 110 may generate an encoded electrical signal and send the electrical signal to the connection port. Within electronic devices, such as the host computer 110 and/or the Bluetooth adapter 120, when processing instructions, issuing instructions, and/or performing actions, the instructions and/or actions may be performed through electrical signals. The electrical signal may refer to an electrical signal, a series of electrical signals, and/or at least two discontinuous electrical signals.

FIG. 2 is a block diagram illustrating an exemplary Bluetooth adapter according to some embodiments of the present disclosure. As shown in FIG. 2, the Bluetooth adapter 200 may include a connection port 210 and a Bluetooth module 220.

The connection port 210 may be configured to be plugged into a host computer (e.g., the host computer 110 shown in FIG. 1). In some embodiments, the connection port 210 may be a USB port. For example, the host computer may include a USB female connector, the connection port of the Bluetooth adapter 120 may include a USB male connector. The host computer 110 and the Bluetooth adapter 120 may implement a plug-in connection through the USB female connector and the USB male connector.

The Bluetooth module 220 may be configured to receive the signal from the host computer through the connection port 210. In some embodiments, the signal from the host computer may include an operation signal. For example, the host computer may include an input device. Exemplary input devices may include a keyboard, a mouse, a touch screen, a key, a microphone, or the like, or a combination thereof. A user may operate the input device of the host computer to cause the host computer to generate the operation signal. The host computer may be plugged into the Bluetooth adapter 200 to send the operation signal to the Bluetooth module 220 of the Bluetooth adapter 200. In some embodiments, the signal from the host computer may include an electrical signal. For example, when the host computer is plugged into the Bluetooth adapter 200, the host computer may achieve an electrical connection with the Bluetooth adapter 200 through the connection port 210. The electrical connection may provide electrical energy to the Bluetooth adapter 200, causing the Bluetooth adapter 200 to enter an operating state. At this time, the host computer may be considered to have sent the electrical signal to the Bluetooth adapter 200. In some embodiments, the Bluetooth module 220 may also be configured to send a signal to the host computer. For example, after the Bluetooth adapter 200 is paired with a Bluetooth device (e.g., the Bluetooth device 130, the first Bluetooth device 140, etc., described in FIG. 1), the Bluetooth module 220 may send a signal generated by the Bluetooth device (e.g., a movement signal of a mouse, etc.) to the host computer.

In some embodiments, the signal from the host computer may be a signal relating to audio control (i.e., an operation signal) triggered in a preset mode. The signal relating to audio control refers to a signal generated by triggering an audio control key on the host computer. Exemplary audio control keys include one or more of a speaker mute key, a speaker unmute key, a microphone mute key, a microphone unmute key, a speaker volume up or down key, and a microphone volume up or down key. Correspondingly, the signal relating to audio control may include one or more of a speaker mute signal, a speaker unmute signal, a microphone mute signal, a microphone unmute signal, a speaker volume up or down signal, and a microphone volume up or down signal.

The preset mode includes triggering the same signal multiple times successively within a preset time period. For example, the user may trigger the same audio control key multiple times successively within the preset time period (e.g., 1s, 3s, 5s, etc.) to generate a corresponding signal. In some embodiments, the preset mode includes triggering different signals according to a preset rule within the preset time period. For example, the user may trigger different audio control keys according to the preset rule within the preset time period (e.g., 1s, 3s, 5s, etc.). Merely by way of example, the preset rule may include triggering any two audio control keys, triggering two adjacent audio control keys, sequentially triggering all audio control keys, or the like.

In some embodiments, in response to determining that the signal from the host computer is the signal relating to audio control triggered in the preset mode, the Bluetooth module 220 may be configured to enter a pairing state (also referred to as a first pairing state). The pairing state allows the Bluetooth adapter 200 to be connected to other Bluetooth devices. The other Bluetooth devices include matching devices with a Bluetooth function (e.g., the Bluetooth device 130). For example, the first pairing state allows the Bluetooth adapter 200 to be connected to a device with an audio output function and of the same model as the Bluetooth adapter 200. The same model refers to having the same attributes as the model of the Bluetooth adapter 200 (e.g., having the same brand identification information, etc.). As another example, the first pairing state allows the Bluetooth adapter 200 to be connected to a device with the audio output function that has been paired with the Bluetooth adapter 200 before. As yet another example, the first pairing state allows the Bluetooth adapter 200 to be connected to all devices with the audio output function. The first pairing state allows the Bluetooth adapter 200 to be connected to any Bluetooth device. In some embodiments, the other Bluetooth devices may include devices with the audio output function. That is, the first pairing state allows the Bluetooth adapter 200 to be connected to devices with the audio output function. In some embodiments, a priority for the Bluetooth adapter 200 to connect to other Bluetooth devices may be set. For example, the first pairing state allows the Bluetooth adapter 200 to preferentially connect to devices of the same model with the audio output function.

Triggering the pairing state of the Bluetooth adapter based on a specific signal (e.g., a signal relating to audio control triggered in a preset mode) is simpler and faster to operate, has low cost, and is applicable to a variety of host computer devices.

In some embodiments, the Bluetooth adapter 200 may be connected to different types of matching devices simultaneously. For example, while maintaining a connection with a device with an audio output function, the Bluetooth adapter 200 may also be connected to another device without an audio output function. In some embodiments, the Bluetooth adapter 200 may be connected to different types of matching devices through different connection protocols, respectively. Exemplary connection protocols may include HID, A2DP, AVRCP, or the like. For example, different connection protocols may be set in the Bluetooth adapter 200. When entering the first pairing state in response to determining that the signal from the host computer is a signal relating to audio control triggered in a preset mode, the first pairing state allows the Bluetooth module 220 to be connected to a device with an audio output function based on a first connection protocol (e.g., the A2DP or the AVRCP protocol) and connected to another device without an audio output function based on a second connection protocol (e.g., the HID protocol).

In some embodiments, the type of key capable of triggering the host computer to generate and/or transmit the signal (i.e., the signal relating to audio control) is related to the type of the connection port 210 and/or the type of the communication protocol between the host computer and the Bluetooth adapter 200. For example, when the connection port 210 is a USB port, the host computer and the Bluetooth adapter 200 communicate based on a USB communication protocol (e.g., the HID protocol). Based on the USB communication protocol, only when the audio control key is triggered, the signal relating to audio control generated by the host computer based on the triggering action on the audio control key is sent to the Bluetooth adapter 200. Thus, the host computer and the Bluetooth adapter 200 may have different communication protocols. For each communication protocol, a corresponding control signal type and/or trigger key type may be set, so that the Bluetooth adapter 200 enters different pairing states based on different communication protocols. For example, as described above, the signal from the host computer may be a signal relating to audio control generated by a triggering action on an audio control key in a preset mode. In response to determining that the signal from the host computer is an audio control signal triggered in a preset mode, the Bluetooth module 220 may enter the first pairing state that allows the Bluetooth adapter 200 to be connected to a device with an audio output function. As another example, the signal from the host computer may not be an audio control signal (also referred to as a non-audio control signal) and is triggered in another preset mode. In response to determining that the signal from the host computer is a non-audio control signal and is triggered in another preset mode, the Bluetooth module 220 may enter a second pairing state that allows the Bluetooth adapter 200 to be connected to a device without an audio output function. Merely by way of example, the non-audio control signal may be generated based on a user's triggering action on a non-audio control key (e.g., a number key, a letter key, etc.). The user may trigger the non-audio control key in a preset mode to generate the non-audio control signal. As another example, the non-audio control signal may be generated based on a second triggering action of the user on the audio control key, where the second triggering action is different from the triggering action generating the signal relating to audio control. That is, the user may trigger the audio control key in different preset modes to generate different signals, and the different signals may cause the Bluetooth adapter 200 to enter different pairing states to connect to different types of devices (e.g., devices with an audio output function, different types of devices without an audio output function, etc.).

By setting control signal types and/or trigger key types, the Bluetooth adapter may enter different pairing states, so that the Bluetooth adapter may be connected to multiple types of devices simultaneously and adapt to more application scenarios. In addition, setting different control signal types and/or trigger key types for different types of devices may facilitate the Bluetooth adapter to match target Bluetooth devices and avoid conflicts during multi-device pairing.

In some embodiments, in the pairing state (e.g., the first or second pairing state), the Bluetooth module 220 may identify a matching device with the strongest signal from at least one surrounding matching device and connect to the matching device. For example, the Bluetooth module 220 may search for nearby matching devices with enabled pairing, identify the matching device with the strongest signal among them, and connect to the matching device. In some embodiments, in the pairing state, the Bluetooth module 220 may determine a target matching device based on information related to historical connected devices and connect to the target matching device. For example, the Bluetooth module 220 may include a storage device on which information related to historical connected devices (e.g., the device ID, connection count, connection duration, etc., of historical connected devices) is stored. The Bluetooth module 220 may preferentially connect to the matching device with the highest connection count (or the longest connection duration) within a historical time period (e.g., one month). As another example, the Bluetooth module 220 may preferentially connect to a new device. The new device may refer to a matching device searched for the first time. Thus, when the user adds a new device and connects it to the host computer for the first time, there is no need to manually select the device name of the new device, making the pairing process simpler and faster. According to the above pairing process, in the pairing state, the Bluetooth module 220 may automatically connect to the target matching device without manual operation (e.g., without providing a user selection interface), which is convenient and fast.

According to the above description, in the embodiments of the present disclosure, the pairing state of the Bluetooth adapter can be triggered based on a specific signal (e.g., a signal relating to audio control), which is simpler and faster to operate, has low cost, and is applicable to a variety of host computer devices.

FIG. 3 is a block diagram illustrating another exemplary Bluetooth adapter according to some embodiments of the present disclosure. As shown in FIG. 3, the Bluetooth adapter 300 may include a connection port 310, a Bluetooth module 320, and a marker device 330.

The connection port 310 may be configured to be plugged into a host computer (e.g., the host computer 110 shown in FIG. 1). The connection port 310 may be the same as or similar to the connection port 210 described in FIG. 2, and details thereof are not repeated herein.

The Bluetooth module 320 may be configured to receive the signal from the host computer through the connection port 310. In some embodiments, the signal from the host computer may include an operation signal. Merely by way of example, the host computer may include an input device. Exemplary input devices may include a keyboard, a mouse, a touch screen, a key, a microphone, or the like, or a combination thereof. A user may operate the input device of the host computer to cause the host computer to generate the operation signal. The host computer may be plugged into the Bluetooth adapter 300 to send the operation signal to the Bluetooth module 320 of the Bluetooth adapter 300. In some embodiments, the signal from the host computer may include an electrical signal. For example, when the host computer is plugged into the Bluetooth adapter 300, the host computer may achieve an electrical connection with the Bluetooth adapter 300 through the connection port 310. The electrical connection may provide electrical energy to the Bluetooth adapter 300, causing the Bluetooth adapter 300 to enter an operating state. At this time, the host computer may be considered to have sent an electrical signal to the Bluetooth adapter 300. In some embodiments, the Bluetooth module 320 may also be configured to send a signal to the host computer. For example, after the Bluetooth adapter 300 is paired with a Bluetooth device (e.g., the Bluetooth device 130, the first Bluetooth device 140, etc., described in FIG. 1), the Bluetooth module 320 may send a signal generated by the Bluetooth device (e.g., a movement signal of a mouse, etc.) to the host computer.

In some embodiments, in response to determining that the connection mode between the connection port 310 and the host computer triggers a preset condition, the Bluetooth module 320 may enter a pairing state that allows the Bluetooth adapter 300 to be connected to other Bluetooth devices. The connection mode between the connection port 310 and the host computer includes a connection state and a disconnection state. In some embodiments, the connection mode between the connection port 310 and the host computer may be determined based on the electrical signal received by the Bluetooth module 320 from the host computer. For example, when the Bluetooth module 320 (e.g., a chip in the Bluetooth module 320) receives the electrical signal, it may be determined that the connection port 310 is plugged into the host computer, that is, in the connection state. When the Bluetooth module 320 (e.g., the chip in the Bluetooth module 320) stops receiving the electrical signal, it may be determined that the connection port 310 is disconnected from the host computer, that is, in the disconnection state.

In some embodiments, the preset condition includes: after the connection port 310 is plugged into the host computer, a first preset count of disconnections and a first preset count of re-insertions are completed within a specified time period, such that after the specified time period, the connection port 310 is in a connection state with the host computer. For example, it may be determined based on the electrical signal from the host computer that whether the connection port 310 completes the first preset count of disconnections (e.g., 1 time, 2 times, 3 times, etc.) and the first preset count of re-insertions (e.g., 1 time, 2 times, 3 times, etc.) within the specified time period (e.g., 2s, 3s, 5s, etc.), and whether the connection port 310 is in a connection state with the host computer after the specified time period. If the first preset count of disconnections and the first preset count of re-insertions are completed within the specified time period, and the connection port 310 is in a connection state with the host computer after the specified time period, the preset condition is triggered. Through the above preset condition, it may be determined whether the user quickly plugs and unplugs the Bluetooth adapter 300 within the specified time period, and the Bluetooth module 320 may be configured to enter the pairing state when the user quickly plugs and unplugs the Bluetooth adapter 300 within the specified time period, which is simple to operate and easy to implement.

In some embodiments, to shorten the time for starting the pairing process, after the connection port 310 is plugged into the host computer 110, if the first preset count of disconnections and the first preset count of re-insertions are completed within the specified time period, the Bluetooth module 320 enters the pairing state immediately without waiting for the end of the specified time period. In some embodiments, the preset condition includes: after the connection port 310 is plugged into the host computer, n disconnections and n re-insertions are completed within the specified time period, where n is a preset value. In some embodiments, a count of disconnections and a count of re-insertions may exceed the preset n times, which also meets the condition for entering the pairing state. For example, if the preset condition is completing two plug-in operations and two plug-out operations within the preset time period, the Bluetooth module 320 may enter the pairing state when three plug-in operations and three plug-out operations are performed during use to optimize the user experience.

In some embodiments, the marker device 330 may be used to determine whether the connection mode between the connection port and the host computer triggers the preset condition. As shown in FIG. 3, the Bluetooth adapter 300 may include the marker device 330 configured to generate a first marker when the connection port 310 is plugged into the host computer, and generate a second marker in response to determining that the connection state between the connection port 310 and the host computer lasts longer than a first preset time period (e.g., 1s, 3s, 5s, etc.). Alternatively, the marker device 330 may be configured to generate a first marker when the connection port 310 is plugged into the host computer, and generate a second marker when no other marker is generated within a second preset time period (e.g., 1s, 3s, 5s, etc.) after the first marker is generated. The other markers include other first markers, which are generated when the connection port 310 is plugged into the host computer again. Thus, the second marker may be used to indicate whether the connection port 310 has been in a connection state with the host computer for a long time. That is, when the connection port 310 has been in a connection state with the host computer for a long time, the marker device 330 generates the second marker. The generation of the second marker may indicate that the user does not quickly plug and unplug the Bluetooth adapter 300 within the preset time period (i.e., the first or second preset time period), and correspondingly, the Bluetooth module 320 may not enter the pairing state when identifying the second marker. If the marker device 330 generates the first marker twice consecutively within the first preset time period, it may be considered that the user quickly plugs and unplugs the Bluetooth adapter 300 within the preset time period, and the Bluetooth module 320 may enter the pairing state.

In some embodiments, when the Bluetooth module 320 enters the pairing state, the pairing state allows the Bluetooth adapter 300 to be connected to a specific type of Bluetooth device. For ease of description, the mode in which the Bluetooth module 220 enters the first pairing state based on the signal relating to audio control described in FIG. 2 may be referred to as a key-triggered mode or a first trigger mode, and the mode in which the Bluetooth module 320 enters the pairing state based on the connection mode between the connection port 310 and the host computer described in FIG. 3 may be referred to as a plug-in and plug-out triggered mode or a second trigger mode. The Bluetooth adapter 300 may be connected to different types of Bluetooth devices based on different trigger modes. For example, different trigger modes may be respectively bound to a specific type of Bluetooth device, thereby realizing connection to different types of Bluetooth devices based on different trigger modes. This can avoid connection conflicts between Bluetooth devices of the same type. Merely by way of example, the Bluetooth module 320 may be configured to enter the first pairing state based on the key-triggered mode, and the first pairing state allows the Bluetooth adapter 300 to be connected to a Bluetooth device with an audio output function. The Bluetooth module 320 may be configured to enter a third pairing state based on the plug-in and plug-out triggered mode, and the third pairing state allows the Bluetooth adapter 300 to be connected to a device without an audio output function (e.g., a mouse, a keyboard, a game controller, etc.).

In some embodiments, the Bluetooth adapter 300 may be connected to another device without an audio output function while maintaining a connection with a device with an audio output function. For example, the Bluetooth module 320 may be configured such that the Bluetooth adapter 300 may realize connection to a headset based on the key-triggered mode, and realize connection to a mouse based on the plug-in and plug-out triggered mode while maintaining the connection to the headset. In some embodiments, the Bluetooth adapter 300 may be connected to another device with an audio output function while maintaining a connection with a device with an audio output function. For example, the Bluetooth module 320 may be configured such that the Bluetooth adapter 300 may realize connection to a headset based on the key-triggered mode, maintain the connection to the current headset, and connect to another headset in the plug-in and pull-out triggered mode. In some embodiments, the Bluetooth adapter 300 may be connected to another device without an audio output function after disconnecting from the device with an audio output function. For example, the Bluetooth module 320 may be configured such that the Bluetooth adapter 300 may realize a connection to a headset based on the key-triggered mode, and disconnect from the headset before connecting to a mouse in the plug-in and plug-out triggered mode. In some embodiments, when the Bluetooth adapter 300 is connected to different types of matching devices simultaneously, it may be connected to the different types of matching devices through different connection protocols, respectively. Exemplary connection protocols may include the HID, the A2DP, the AVRCP, or the like.

In some embodiments, in the pairing state, the Bluetooth module 320 may identify a matching device with the strongest signal from at least one surrounding matching device and connect to the matching device. For example, the Bluetooth module 320 may search for nearby matching devices with enabled pairing, identify the matching device with the strongest signal among them, and connect to the matching device. In some embodiments, in the pairing state, the Bluetooth module 320 may determine a target matching device based on information related to historical connected devices and connect to the target matching device. For example, the Bluetooth module 320 may include a storage device on which information related to historical connected devices (e.g., the device ID, connection count, connection duration, etc., of historical connected devices) is stored. The Bluetooth module 320 may preferentially connect to the matching device with the highest connection count (or the longest connection duration) within a historical time period (e.g., one month). As another example, the Bluetooth module 320 may preferentially connect to a new device. According to the above pairing process, in the pairing state, the Bluetooth module 320 may automatically connect to the target matching device without manual operation (e.g., without providing a user selection interface), which is convenient and fast.

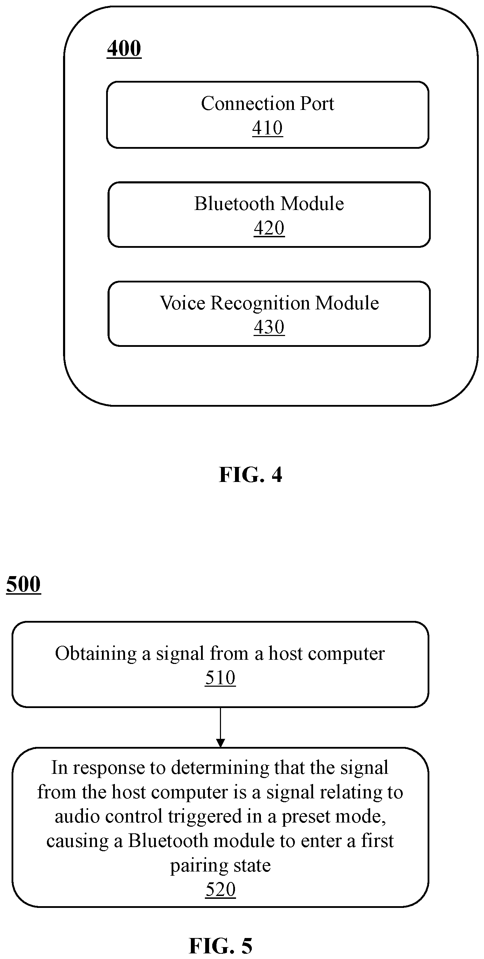

FIG. 4 is a block diagram illustrating a further exemplary Bluetooth adapter according to some embodiments of the present disclosure. As shown in FIG. 4, the Bluetooth adapter 400 may include a connection port 410, a Bluetooth module 420, and a voice recognition module 430.

The connection port 410 may be configured to be plugged into a host computer (e.g., the host computer 110 shown in FIG. 1). The connection port 410 may be the same as or similar to the connection port 210 described in FIG. 2 and/or the connection port 310 described in FIG. 3, and details thereof are not repeated herein.

The Bluetooth module 420 may be configured to communicate with a first Bluetooth device (e.g., the first Bluetooth device 140). In some embodiments, the Bluetooth module 420 may establish a connection with the first Bluetooth device to implement communication based on the methods described in FIG. 2 and/or FIG. 3 (e.g., the key-triggered mode and/or the plug-in and plug-out triggered mode), and details thereof are not repeated herein. It is understood that the first Bluetooth device may implement a Bluetooth connection with the host computer through the Bluetooth adapter 400. In some embodiments, the first Bluetooth device has a voice pickup function. For example, the first Bluetooth device may be a headset, a microphone, or another Bluetooth device with a voice pickup function. In some embodiments, the first Bluetooth device may send the picked-up voice information to the Bluetooth adapter 400 or the host computer.

The voice recognition module 430 may be configured to recognize the voice information picked up by the first Bluetooth device. For example, the Bluetooth adapter 400 may receive the voice information picked up by the first Bluetooth device and recognize the voice information based on a voice recognition algorithm. By setting the voice recognition module 430, the Bluetooth adapter 400 can directly recognize the voice information picked up by the first Bluetooth device and control the operation of the Bluetooth module 420 based on the recognition result. On one hand, the control process of the Bluetooth module 420 can be directly implemented based on the user voice to improve the user experience. On the other hand, there is no need to implement the recognition and calculation process based on other devices, thereby enhancing control efficiency.

In some embodiments, the recognition result may indicate whether the voice information contains a pairing instruction. The Bluetooth adapter 400 (or the voice recognition module 430) may control the Bluetooth module 420 to enter a pairing state based on the recognition result. For example, in response to determining that the voice information contains a pairing instruction, the Bluetooth module 420 may enter the pairing state. The pairing state allows the Bluetooth adapter 400 to be connected to a second Bluetooth device. In some embodiments, the voice information may include a type of the pairing instruction. Different types of second Bluetooth devices may correspond to different types of pairing instructions. For example, the voice information may include the type of the second Bluetooth device (e.g., "mouse," "keyboard," etc.). In response to determining that the voice information contains a pairing instruction, and based on the device type included in the pairing instruction, the Bluetooth module 420 may enter the pairing state that allows the Bluetooth adapter 400 to be connected to a second Bluetooth device of a corresponding type.

In some embodiments, the recognition process of the voice information may be performed on the host computer. For example, after the first Bluetooth device implements a Bluetooth connection with the host computer through the Bluetooth adapter 400, the picked-up voice information may be sent to the host computer through the Bluetooth connection. The host computer may recognize the voice information based on the voice recognition algorithm and send the recognition result to the Bluetooth adapter 400 (or the voice recognition module 430). The Bluetooth adapter 400 (or the voice recognition module 430) may control the Bluetooth module 420 to enter the pairing state based on the recognition result. By using the host computer to perform the recognition process of the voice information, the Bluetooth adapter 400 may not include the voice recognition module 430, or the voice recognition module 430 may only be used to control the Bluetooth module 420 to enter the pairing state based on the recognition result. This can simplify the structural and operational complexity of the Bluetooth adapter 400, which is beneficial to the miniaturization of the structure of the Bluetooth adapter 400.

In some embodiments, in the pairing state, the Bluetooth module 420 may be configured to disconnect communication with the first Bluetooth device. This can avoid connection conflicts between a plurality of Bluetooth devices (e.g., Bluetooth devices of the same type), enabling the host computer to quickly switch to the device specified by the user (i.e., the second Bluetooth device).

In some embodiments, in the pairing state, the Bluetooth module 420 may be configured to determine whether to disconnect communication with the first Bluetooth device having the voice pickup function based on the type of the second Bluetooth device. For example, the first Bluetooth device may include a headset with a voice pickup function. When the type of the second Bluetooth device (e.g., a mouse, a keyboard, etc.) is different from the type of the first Bluetooth device, which indicates that the functions of the first Bluetooth device and the second Bluetooth device do not conflict, the Bluetooth module 420 may maintain communication with the first Bluetooth device. In some embodiments, the type of the second Bluetooth device may be determined based on the type of surrounding Bluetooth devices and/or the type of the pairing instruction in the voice information. For example, the Bluetooth module 420 may identify the type of surrounding Bluetooth device and determine whether the type of the second Bluetooth device is the same as the type of the first Bluetooth device. If they are the same, the Bluetooth module 420 may determine to disconnect communication with the first Bluetooth device; if they are different, the Bluetooth module 420 may determine not to disconnect communication with the first Bluetooth device.
As another example, as described above, the voice information may include the type of the pairing instruction. Based on the type of the pairing instruction, the Bluetooth adapter 400 may be connected to a second Bluetooth device of a corresponding type. Therefore, the type of the second Bluetooth device may be determined based on the device type included in the pairing instruction. When the device type included in the pairing instruction (or the type of the second Bluetooth device) is different from the type of the first Bluetooth device, the Bluetooth module 420 may determine not to disconnect communication with the first Bluetooth device.

Determining whether to disconnect communication with the first Bluetooth device according to the type of the second Bluetooth device may allow the Bluetooth adapter 400 to be connected to a plurality of Bluetooth devices with different functions simultaneously. Thus, the host computer can be adapted to a plurality of Bluetooth devices simultaneously without conflicts between the plurality of Bluetooth devices, improving the compatibility and accuracy of the Bluetooth adapter 400.

In some embodiments, in the pairing state, the Bluetooth module 420 may identify a matching device with the strongest signal from at least one surrounding matching device and connect to the matching device. For example, the Bluetooth module 420 may search for nearby matching devices with enabled pairing, identify the matching device with the strongest signal among them, and connect to the matching device. For example, the Bluetooth module 420 may search for nearby matching devices with enabled pairing, identify a preset count of matching devices with relatively strong signals (e.g., 2, 3, 5, etc.), and select one of the matching devices to connect according to the type of the preset count of matching devices. In some embodiments, in the pairing state, the Bluetooth module 420 may determine a target matching device based on information related to historical connected devices and connect to the target matching device. For example, the Bluetooth module 420 may include a storage device on which information related to historical connected devices (e.g., a device ID, connection count, connection duration, etc., of historical connected devices) is stored. The Bluetooth module 420 may preferentially connect to the matching device with the highest connection count (or the longest connection duration) within a historical time period (e.g., one month). As another example, the Bluetooth module 420 may preferentially connect to a new device. According to the above pairing process, in the pairing state, the Bluetooth module 420 may automatically connect to the target matching device without manual operation (e.g., without providing a user selection interface), which is convenient and fast.

The present disclosure describes different types of Bluetooth adapters (the Bluetooth adapters 200, 300, 400) and the methods for the Bluetooth adapters to enter the pairing state with reference to FIGs. 2-4. It should be noted that the above descriptions of the Bluetooth adapters are merely for exemplary purposes and are not intended to limit the scope of the present disclosure. For those skilled in the art, arbitrary changes or modifications may be made based on the present disclosure. In some embodiments, one or more components and/or functions of the Bluetooth adapters 200, 300, 400 may be deleted. In some embodiments, one or more components and/or functions of the Bluetooth adapters 200, 300, 400 may be implemented simultaneously. For example, for ease of description, the mode in which the Bluetooth module 420 enters the pairing state based on voice information described in FIG. 4 may be referred to as a voice-triggered mode or a third trigger mode. The Bluetooth adapter may have two or more of the key-triggered mode, the plug-in and plug-out triggered mode, and the voice-triggered mode simultaneously. The key-triggered mode may be used to trigger the connection between the Bluetooth adapter and a device with a voice pickup function and/or an audio output function, the plug-in and plug-out triggered mode may be used to trigger the connection between the Bluetooth adapter and a device without a voice pickup function and/or an audio output function, and the voice-triggered mode may be used to trigger the connection between the Bluetooth adapter and a specific type of device.

FIG. 5 is a flowchart illustrating an exemplary process for a Bluetooth adapter to enter a pairing state according to some embodiments of the present disclosure. The Bluetooth adapter may include the Bluetooth adapters 200, 300, 400 shown in FIGs. 2-4, or the like, or any combination thereof. In some embodiments, the process 500 may be executed by a processing device (e.g., the processing device 150) or a module (e.g., a Bluetooth module, or the like) in the Bluetooth adapter. As shown in FIG. 5, the process 500 may include the following operations.

In 510, the processing device 150 may obtain a signal from the host computer.

In some embodiments, a Bluetooth adapter may include a connection port and a Bluetooth module. The connection port may be configured to be plugged into a host computer (e.g., the host computer 110 shown in FIG. 1). The Bluetooth module may be configured to receive the signal from the host computer through the connection port. In some embodiments, the signal from the host computer may include an operation signal. Merely by way of example, the host computer may include an input device. A user may operate the input device of the host computer to cause the host computer to generate the operation signal. The host computer may be plugged into the Bluetooth adapter to send the operation signal to the Bluetooth module of the Bluetooth adapter. In some embodiments, the signal from the host computer may include an electrical signal. For example, when the host computer is plugged into the Bluetooth adapter, the host computer may achieve an electrical connection with the Bluetooth adapter through the connection port. The electrical connection may provide electrical energy to the Bluetooth adapter, causing the Bluetooth adapter to enter an operating state. At this time, the host computer may be considered to have sent an electrical signal to the Bluetooth adapter. The signal from the host computer may be obtained by the processing device 150. For example, the processing device 150 may be connected to the Bluetooth module or serve as a part of the Bluetooth module, thereby obtaining the signal from the host computer.

In 520, in response to determining that the signal from the host computer is a signal relating to audio control triggered in a preset mode, the processing device 150 may cause the Bluetooth module to enter a first pairing state.

In some embodiments, the signal relating to audio control refers to a signal generated by triggering an audio control key on the host computer (i.e., the operation signal). Exemplary audio control keys include one or more of a pause playback key, a resume playback key, a mute key, and a volume adjustment key. Correspondingly, the signal relating to audio control may include one or more of a pause playback control signal, a resume playback control signal, a mute control signal, and a volume adjustment control signal. In some embodiments, the preset mode includes triggering the same signal multiple times within a preset time period. In some embodiments, the preset mode includes triggering different signals according to a preset rule within a preset time period.

In response to determining that the signal from the host computer is a signal relating to audio control triggered in a preset mode, the processing device 150 may cause the Bluetooth module to enter a pairing state (also referred to as a first pairing state). The first pairing state allows the Bluetooth adapter 200 to be connected to other devices. In some embodiments, the first pairing state allows the Bluetooth adapter to be connected to any Bluetooth device. In some embodiments, the other devices may include devices with an audio output function. That is, the first pairing state allows the Bluetooth adapter 200 to be connected to devices with an audio output function.

In some embodiments, the processing device 150 may cause the Bluetooth module to be connected to different types of matching devices simultaneously. For example, while maintaining a connection with a device with an audio output function, the processing device 150 may cause the Bluetooth module to be connected to another device without an audio output function.

In some embodiments, in response to determining that the signal from the host computer is not a audio control signal triggered in a preset mode (e.g., generated based on a user's triggering action on a non-audio control key (e.g., a number key, a letter key, or the like)), the processing device 150 may cause the Bluetooth module to enter a second pairing state that allows the Bluetooth adapter to be connected to a device without an audio output function.

In some embodiments, in the pairing state (e.g., the first or second pairing state), the processing device 150 may cause the Bluetooth module to identify a matching device with the strongest signal from at least one surrounding matching device and connect to the matching device. In some embodiments, in the pairing state, the processing device 150 may cause the Bluetooth module to determine a target matching device based on information related to historical connected devices and connect to the target matching device. In some embodiments, the processing device 150 may cause the Bluetooth module to preferentially connect to a new device.

More descriptions regarding the processing device 150 causing the Bluetooth module to enter a pairing state may be found in descriptions in connection with FIG. 2, and details thereof are not repeated herein.

According to the above process 500, in the pairing state, the processing device 150 may cause the Bluetooth module to automatically select and/or connect to a target matching device based on the signal from the host computer, without manual operation (e.g., without providing a user selection interface), which is convenient and fast.

It should be noted that the above description of the process 500 is merely for convenience of description and is not intended to limit the present disclosure to the scope of the illustrated embodiments. It is understood that for those skilled in the art, after understanding the principle of the process, arbitrary combinations of each operation may be made, or any operation may be added or deleted without departing from the principle.

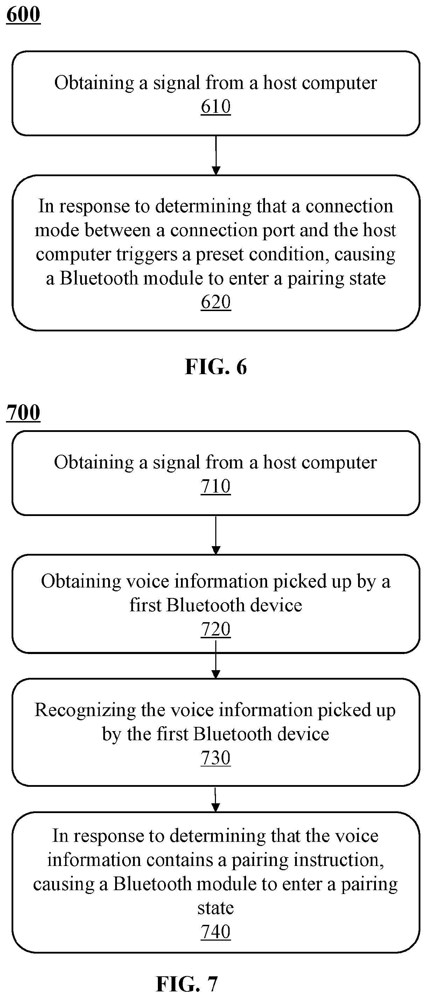

FIG. 6 is a flowchart illustrating an exemplary process for a Bluetooth adapter to enter a pairing state according to some embodiments of the present disclosure. The Bluetooth adapter may include the Bluetooth adapters 200, 300, 400 shown in FIGs. 2-4, or the like, or any combination thereof. In some embodiments, the process 600 may be executed by a processing device (e.g., the processing device 150) or a module (e.g., a Bluetooth module, a marker device, or the like) in the Bluetooth adapter. As shown in FIG. 6, the process 600 may include the following operations.

In 610, the processing device 150 may obtain a signal from the host computer.

Operation 610 may be performed in a manner similar to that of operation 510, and details thereof are not repeated herein.

In 620, in response to determining that a connection mode between the connection port and the host computer triggers a preset condition, the processing device 150 may cause the Bluetooth module to enter the pairing state. The pairing state allows the Bluetooth adapter to be connected to other Bluetooth devices.

In some embodiments, a connection mode between the connection port and the host computer includes a connection state and a disconnection state. The connection mode between the connection port and the host computer may be determined by the processing device 150 based on the electrical signal received by the Bluetooth module from the host computer. For example, when the Bluetooth module receives the electrical signal, it may be determined that the connection port is plugged into the host computer, that is, in the connection state. When the Bluetooth module stops receiving the electrical signal, it may be determined that the connection port is disconnected from the host computer, that is, in the disconnection state. In some embodiments, the preset condition includes: after the connection port is plugged into the host computer, a first preset count of disconnections and a first preset count of re-insertions are completed within a specified time period, such that after the specified time period, the connection port is in a connection state with the host computer. In some embodiments, the processing device 150 may determine whether the connection mode between the connection port and the host computer triggers the preset condition based on a marker device (e.g., the marker device 330). Through the above preset condition, the processing device 150 may determine whether the user quickly plugs and unplugs the Bluetooth adapter within the specified time period, and the Bluetooth module may be configured to enter the pairing state when the user quickly plugs and unplugs the Bluetooth adapter within the specified time period, which is simple to operate and easy to implement.

In some embodiments, when the Bluetooth module enters the pairing state, the pairing state allows the Bluetooth adapter to be connected to a specific type of Bluetooth device. For example, the processing device 150 may respectively bind different trigger modes (the key-triggered mode, the plug-in and pull-out triggered mode) to a specific type of Bluetooth device, so that when the Bluetooth module enters the pairing state, it can be connected to different types of Bluetooth devices based on different trigger modes. This can avoid connection conflicts between Bluetooth devices of the same type.

In some embodiments, the processing device 150 may enable the Bluetooth adapter to be connected to another device without an audio output function while maintaining a connection with a device with an audio output function. In some embodiments, when the Bluetooth adapter is connected to different types of matching devices simultaneously, the connections may be implemented through different connection protocols (e.g., the HID, the A2DP, the AVRCP, or the like) respectively.

More descriptions regarding the method for the processing device 150 to cause the Bluetooth module to enter a pairing state may be found in descriptions in connection with FIG. 3, and details thereof are not repeated herein.

According to the above process 600, in the pairing state, the processing device 150 may cause the Bluetooth module to automatically select and/or connect to a target matching device based on the signal from the host computer, without manual operation (e.g., without providing a user selection interface), which is convenient and fast. In addition, the processing device 150 may also cause the Bluetooth module to enter different pairing states based on different trigger modes, so that the Bluetooth adapter can be connected to different types of Bluetooth devices under different trigger modes, avoiding connection conflicts between Bluetooth devices of the same type and increasing the diversity of connection modes.

It should be noted that the above description of the process 600 is merely for convenience of description and is not intended to limit the present disclosure to the scope of the illustrated embodiments. It is understood that for those skilled in the art, after understanding the principle of the process, arbitrary combinations of each operation may be made, or any operation may be added or deleted without departing from the principle.

FIG. 7 is a flowchart illustrating an exemplary process for a Bluetooth adapter to enter a pairing state according to some embodiments of the present disclosure. The Bluetooth adapter may include the Bluetooth adapters 200, 300, 400 shown in FIGs. 2-4, or the like, or any combination thereof. In some embodiments, the process 700 may be executed by a processing device (e.g., the processing device 150) or a module (e.g., a Bluetooth module, a marker device, or the like) in the Bluetooth adapter. As shown in FIG. 7, the process 700 may include the following operations.

In 710, the processing device 150 may obtain a signal from a host computer.

Operation 710 may be performed in a manner similar to that of operation 510, and details thereof are not repeated herein.

In 720, the processing device 150 may obtain voice information picked up by the first Bluetooth device.

In some embodiments, the Bluetooth adapter may include a connection port and a Bluetooth module. The connection port may be configured to be plugged into the host computer (e.g., the host computer 110 shown in FIG. 1). The Bluetooth module may be configured to communicate with a first Bluetooth device (e.g., the first Bluetooth device 140). The first Bluetooth device has a voice pickup function. For example, the first Bluetooth device may be a headset, a microphone, or another Bluetooth device with a voice pickup function. In some embodiments, the first Bluetooth device may send the picked-up voice information to the Bluetooth adapter or the host computer. The voice information may be obtained by the processing device 150 from the Bluetooth adapter or the host computer.

In 730, the processing device 150 (e.g., the voice recognition module 430) may recognize the voice information picked up by the first Bluetooth device. For example, the processing device 150 may recognize the voice information based on a voice recognition algorithm and generate a recognition result. In some embodiments, the recognition result may indicate whether the voice information contains a pairing instruction.

In 740, in response to determining that the voice information contains the pairing instruction, the processing device 150 may cause the Bluetooth module to enter the pairing state, and the pairing state allows the Bluetooth adapter to be connected to a second Bluetooth device.

In some embodiments, the voice information may include a type of the pairing instruction. Different types of the second Bluetooth devices may correspond to different types of the pairing instructions. For example, the voice information may include the name of the second Bluetooth device (e.g., "mouse," "keyboard," or the like). In response to determining that the voice information contains the pairing instruction, and based on the type of the pairing instruction, the processing device 150 may cause the Bluetooth module to enter the pairing state that allows the Bluetooth adapter to be connected to the second Bluetooth device of a corresponding type.

In some embodiments, the recognition process of the voice information may be performed on the host computer. For example, the first Bluetooth device may send the picked-up voice information to the host computer through a Bluetooth connection. The host computer may recognize the voice information based on the voice recognition algorithm and send the recognition result to the Bluetooth adapter. The processing device 150 may control the Bluetooth module to enter the pairing state based on the recognition result.

In some embodiments, in the pairing state, the processing device 150 may cause the Bluetooth module to disconnect communication with the first Bluetooth device. This can avoid connection conflicts between a plurality of Bluetooth devices (e.g., Bluetooth devices of the same type), enabling the host computer to quickly switch to the device specified by the user (i.e., the second Bluetooth device).

In some embodiments, in the pairing state, the processing device 150 may determine whether to cause the Bluetooth module to disconnect communication with the first Bluetooth device having the voice pickup function based on the type of the second Bluetooth device. In some embodiments, the type of the second Bluetooth device may be determined based on the type of the surrounding Bluetooth devices and/or the type of the pairing instruction in the voice information.

More descriptions regarding the method for controlling the Bluetooth module to enter the pairing state based on voice information may be found in descriptions in connection with FIG. 4, and details thereof are not repeated herein.

According to the above process 700, in the pairing state, the processing device 150 may cause the Bluetooth module to automatically select and/or connect to a target matching device based on the user's voice information, without manual operation (e.g., without providing a user selection interface), which is convenient and fast. In addition, the processing device 150 may also enable the Bluetooth adapter to be connected to a Bluetooth device of a corresponding type based on the type of the pairing instruction included in the voice information, allowing the user to select the device to be connected based on the voice information, improving the accuracy of the connection process and enhancing user experience.

It should be noted that the above description of the process 700 is merely for convenience of description and is not intended to limit the present disclosure to the scope of the illustrated embodiments. It is understandable that for those skilled in the art, after understanding the principle of the process, arbitrary combinations of each operation may be made, or any operation may be added or deleted without departing from the principle.

Basic concepts have been described above. Obviously, for those skilled in the art, the aforementioned invention disclosure is merely provided as an example and does not constitute a limitation on the present disclosure. Although not explicitly stated herein, those skilled in the art may make various modifications, improvements, and corrections to the present disclosure. Such modifications, improvements, and corrections are suggested in the present disclosure, so such modifications, improvements, and corrections still fall within the spirit and scope of the exemplary embodiments of the present disclosure.

Meanwhile, the present disclosure uses specific terms to describe the embodiments of the present disclosure. Terms such as "one embodiment," "an embodiment," and/or "some embodiments" refer to a certain feature, structure, or characteristic related to at least one embodiment of the present disclosure. Therefore, it should be emphasized and noted that "an embodiment" or "one embodiment" or "an alternative embodiment" mentioned twice or more at different positions in the present disclosure are not necessarily referring to the same embodiment. In addition, certain features, structures, or characteristics in one or more embodiments of the present disclosure may be appropriately combined.

In addition, those skilled in the art can understand that various aspects of the present disclosure may be illustrated and described through a plurality of patentable types or scenarios, including any new and useful processes, machines, products, or combinations of substances, or any new and useful improvements to these. Correspondingly, various aspects of the present disclosure may be fully implemented by hardware, fully implemented by software (including firmware, resident software, microcode, etc.), or implemented by a combination of hardware and software. The above-mentioned hardware or software may all be referred to as a "data block," "module," "engine," "unit," "component," or "system." In addition, various aspects of the present disclosure may be embodied as a computer product located in one or more computer-readable media, where the product includes computer-readable program code.

In addition, unless explicitly stated in the claims, the order of processing elements and sequences, the use of numbers, letters, or other names in the present disclosure are not intended to limit the order of the processes and methods of the present disclosure. Although the above disclosure discusses some currently considered useful invention embodiments through various examples, it should be understood that such details are only for illustrative purposes. The appended claims are not limited to the disclosed embodiments; on the contrary, the appended claims are intended to cover all modifications and equivalent combinations that conform to the essence and scope of the embodiments of the present disclosure. For example, although the system components described above may be implemented by hardware devices, they may also be implemented only through a software solution, such as installing the described system on an existing server or mobile device.

Similarly, it should be noted that in order to simplify the expression of the disclosure of the present disclosure and thereby facilitate the understanding of one or more invention embodiments, in the previous description of the embodiments of the present disclosure, a plurality of features are sometimes incorporated into a single embodiment, accompanying drawing, or description thereof. However, this disclosure method does not mean that the subject matter of the present disclosure requires more features than those mentioned in the claims. In fact, the features of an embodiment are fewer than all the features of the single embodiment disclosed above.

In some embodiments, numbers describing the quantity of components and attributes are used. It should be understood that such numbers used for describing the embodiments are modified by modifiers such as "approximately," "roughly," or "substantially" in some examples. Unless otherwise stated, "approximately," "roughly," or "substantially" indicates that the number allows a variation of ±20%. Correspondingly, in some embodiments, the numerical data used in the specification and claims are all approximate values, and the approximate values may change according to the required characteristics of individual embodiments. In some embodiments, numerical data should consider the specified precision requirements. Although the numerical ranges and data used to confirm the breadth of the scope in some embodiments of the present disclosure are approximate values, in specific embodiments, the setting of such numerical values is as precise as possible within feasible ranges.

## Claims

1. A Bluetooth adapter, comprising:
a connection port, configured to be plugged into a host computer; and
a Bluetooth module, configured to receive a signal from the host computer through the connection port, wherein
in response to determining that the signal from the host computer is a signal relating to audio control and is triggered in a preset mode, the Bluetooth module enters a first pairing state, the first pairing state allowing the Bluetooth adapter to be connected to a device with an audio output function.

2. The Bluetooth adapter according to claim 1, wherein the signal relating to audio control comprises one or more of a speaker mute signal, a speaker unmute signal, a microphone mute signal, a microphone unmute signal, a speaker volume up or down signal, and a microphone volume up or down signal.

3. The Bluetooth adapter according to claim 2, wherein the preset mode comprises triggering the same signal multiple times within a preset time period, or triggering different signals according to a preset pattern within a preset time period.

4. The Bluetooth adapter according to claim 1, further configured to:
connect to a device without an audio output function while maintaining a connection with the device with an audio output function.

5. The Bluetooth adapter according to claim 1, further configured such that:
in response to determining that the signal from the host computer is not an audio control signal and is triggered in another preset mode, the Bluetooth module enters a second pairing state, the second pairing state allowing the Bluetooth adapter to be connected to a device without an audio output function.

6. The Bluetooth adapter according to claim 1, wherein the Bluetooth module is further configured to:
in the first pairing state, identify a matching device with the strongest signal from at least one surrounding matching device and connect to the matching device with the strongest signal.

7. A method for a Bluetooth adapter to enter a pairing state, the Bluetooth adapter comprising:
a connection port, configured to be plugged into a host computer; and
a Bluetooth module, configured to receive a signal from the host computer through the connection port;
wherein the method comprises:
in response to determining that the signal from the host computer is a signal relating to audio control and is triggered in a preset mode, causing the Bluetooth module to enter a first pairing state, the first pairing state allowing the Bluetooth adapter to be connected to a device with an audio output function.

8. A Bluetooth adapter, comprising:
a connection port, configured to be plugged into a host computer; and
a Bluetooth module, configured to receive a signal from the host computer through the connection port, wherein
in response to determining that a connection between the connection port and the host computer triggers a preset condition, the Bluetooth module enters a pairing state, the pairing state allowing the Bluetooth adapter to be connected to other Bluetooth devices.

9. The Bluetooth adapter according to claim 8, wherein the preset condition includes: after the connection port is plugged into the host computer, a first preset count of disconnections and a first preset count of re-insertions are completed within a specified time period such that after the specified time period, the connection port is in a connection state with the host computer.

10. The Bluetooth adapter according to claim 9, further comprising a marker device, wherein
the marker device is configured to:
generate a first marker when the connection port is plugged into the host computer; and
generate a second marker in response to determining that the connection state between the connection port and the host computer lasts longer than a first preset time period, or no other marker is generated in a second preset time period after the first marker is generated; and
the Bluetooth module is further configured to enter the pairing state in response to determining that the first marker appears twice consecutively within the first preset time period.

11. The Bluetooth adapter according to claim 8, wherein the pairing state allows the Bluetooth adapter to be connected to other Bluetooth devices, includes:
the pairing state allows the Bluetooth adapter to be connected to a specific type of Bluetooth device.

12. The Bluetooth adapter according to claim 8, further configured to:
connect to a device without an audio output function while maintaining a connection with a device with an audio output function.

13. The Bluetooth adapter according to claim 8, wherein the Bluetooth module is further configured to:
in the pairing state, identify a matching device with the strongest signal from at least one surrounding matching device and connect to the matching device with the strongest signal.

14. A method for a Bluetooth adapter to enter a pairing state, the Bluetooth adapter comprising:
a connection port, configured to be plugged into a host computer;
a Bluetooth module, configured to receive a signal from the host computer through the connection port;
wherein the method comprises:
in response to determining that a connection between the connection port and the host computer triggers a preset condition, causing the Bluetooth module to enter a pairing state, the pairing state allowing the Bluetooth adapter to be connected to other Bluetooth devices.

15. A Bluetooth adapter, comprising:
a connection port, configured to be plugged into a host computer;
a Bluetooth module, configured to communicate with a first Bluetooth device, the first Bluetooth device having a voice pickup function; and
a voice recognition module, configured to recognize voice information picked up by the first Bluetooth device, wherein
in response to determining that the voice information contains a pairing instruction, the Bluetooth module enters a pairing state, the pairing state allowing the Bluetooth adapter to be connected to a second Bluetooth device.

16. The Bluetooth adapter according to claim 15, wherein the Bluetooth module is further configured to:
in the pairing state, disconnect communication with the first Bluetooth device.

17. The Bluetooth adapter according to claim 15, wherein the Bluetooth module is further configured to:
in the pairing state, determine whether to disconnect communication with the first Bluetooth device having the voice pickup function based on a type of the second Bluetooth device.

18. The Bluetooth adapter according to claim 15, wherein the Bluetooth module is further configured such that:
based on a type of the pairing instruction, the pairing state allows the Bluetooth adapter to be connected to a second Bluetooth device of a corresponding type.

19. The Bluetooth adapter according to claim 15, further configured to:
connect to a device without an audio output function while maintaining a connection with a device with an audio output function.

20. The Bluetooth adapter according to claim 15, wherein the Bluetooth module is further configured to:
in the pairing state, identify a matching device with the strongest signal from at least one surrounding matching device and connect to the matching device with the strongest signal.

21. A method for a Bluetooth adapter to enter a pairing state, the Bluetooth adapter comprising:
a connection port, configured to be plugged into a host computer;
a Bluetooth module, configured to communicate with a first Bluetooth device, the first Bluetooth device having a voice pickup function; and
a voice recognition module, configured to recognize voice information picked up by the first Bluetooth device;
wherein the method comprises:
in response to determining that the voice information contains a pairing instruction, causing the Bluetooth module to enter a pairing state, the pairing state allowing the Bluetooth adapter to be connected to a second Bluetooth device.
